Europäisches Patentamt

European Patent Office

Office européen des brevets

(11) Publication number: **0 295 696 B1**

## EUROPEAN PATENT SPECIFICATION

(45) Date of publication of patent specification: **02.01.92**    (51) Int. Cl.⁵: **C02F 1/46**

(21) Application number: **88109680.4**

(22) Date of filing: **16.06.88**

(54) Method for removing organic dye stuffs and heavy metals from wastewater.

(30) Priority: **18.06.87 US 63533**
**16.02.88 US 156438**

(43) Date of publication of application:
**21.12.88 Bulletin 88/51**

(45) Publication of the grant of the patent:
**02.01.92 Bulletin 92/01**

(84) Designated Contracting States:
**CH DE GB LI**

(56) References cited:
**CH-A- 646 404        DE-A- 3 237 246**
**DE-A- 3 336 460       US-A- 3 926 754**
**US-A- 4 036 726       US-A- 4 123 339**

(73) Proprietor: **ANDCO ENVIRONMENTAL PRO-CESSES, INC.**
**595 Commerce Drive**
**Amherst New York 14150(US)**

(72) Inventor: **Uhrich, Kevin D.**
**752 Sweet Home Road**
**Amherst, NY 14226(US)**

(74) Representative: **Henkel, Feiler, Hänzel & Partner**
**Möhlstrasse 37**
**W-8000 München 80(DE)**

## Description

This invention relates to a process for removing contaminants from a wastewater stream and in particular to removing color impurities including organic dye stuffs and other impurities such as heavy metals from industrial wastewater.

BACKGROUND OF THE INVENTION

Waste liquid or aqueous media containing toxic materials has presented an acute disposal problem. However, in accordance with the inventions described and claimed in U.S. Patent Nos. 3,926,754; 4,036,726 and 4,123,339 assigned to the assignee of this invention, heavy metals such as hexavalent chromium ions were removed from cooling tower wastewater rapidly and efficiently, electrochemically.

In the above patents a process and apparatus were described wherein wastewater containing hexavalent chromium ions is caused to flow between a plurality of electrodes. It was discovered that when the anode has a surface or a portion of the surface of iron, an iron alloy or an insoluble iron compound an iron compound such as iron hydroxide will be produced anodically. In turn an insoluble trivalent chromium compound, preferably as the hydroxide, will be produced which will complex with or otherwise physically or chemically combine with the insoluble iron compound to thereby permit removal from solution. Whereas it was previously considered necessary to reduce hexavalent chromium to trivalent chromium in acidic solution, it was discovered that the iron compound or complex formed will reduce the hexavalent chromium and coprecipitate therewith in a solution having a pH of about 4 to about 11. Accordingly, the invention described and claimed in said patents produces an insoluble iron-chromium precipitate without pH adjustment to thereby rapidly and efficiently remove hexavalent chromium from solution. The precipitate is then removed from aqueous media utilizing conventional techniques such as a clarifier, settling pond or the like and the aqueous media thereby clarified is suitable for disposal.

In this process, hexavalent chromium undergoes cathodic reduction to form trivalent chromium as insoluble chromic-hydroxide which complexes with iron which enters solution at the anode. The products are not susceptible to further electrolytic oxidation at the anode, back to hexavalent chromium, apparently due to the difference in ionization potential, at least in part, because the production of the hydroxide ion at the anode occurs at a much lower potential than other electrode oxidations. Thus, because of the non amphoteric state of the iron complex, the reaction continues until the undesirable contaminating ions are completely or substantially completely removed from solution in the aqeuous media.

BRIEF SUMMARY OF THE INVENTION

It has now been discovered however that organic dye stuffs in wastewater from for example carpeting or textile manufacturing facilities can be electrolytically removed in a cell with an anode of iron, an iron alloy, or at least a surface covered with an iron containing compound. The invention is not limited to the use of the cell described and claimed in the above referenced patent, however, that cell is preferred.

Accordingly, it is an object of this invention to provide a method for simultaneously removing organic dye stuffs and heavy metal contaminants from wastewater.

It is yet another object of this invention to provide a method for electrolytically cleaning wastewater from textile and carpet manufacturing facilities to remove organic dye stuffs in an electrolytic cell having an anode of iron, iron alloy, or an insoluble iron compound.

It is still another object of this invention to provide a method for precipitating organic dye stuffs whether water insoluble or soluble from wastewater by electrolytically generating ferrous ion at an anode and coprecipitating said dye stuff with ferrous hydroxide.

DETAILED DESCRIPTION OF THE INVENTION

These and other objects will become readily apparent with reference to the following description:

While this invention is not intended to be limited to the type of cell, as described above, it is preferred to use the electrolytic cell described and claimed in the above patents. This cell consists of a housing of an inert material such as polyvinyl chloride with a plurality of electrode plates closely spaced therein. The anode is composed of or at least covered with iron and may be of hot or cold rolled steel, stainless steel, another iron alloy, or an insoluble iron compound such as ferrous oxide or magnetite. The cathode preferably also is of iron but may be any other suitable electrolytic material compatible with the anode and electrolyte. An electric potential will be applied to an anode plate and a cathode plate, and preferably a

EP 0 295 696 B1

plurality of iron plates will be disposed between the anode and the cathode in mutually spaced relationship.

The process of this invention is intended to be carried out at a pH of between 7 and 9 and at room temperature. At this pH, as will be subsequently described, organic color impurities will coprecipitate and in addition, heavy metals and other contaminates will also be removed. For example it is possible to remove phosphate, cyanide, cyanate, arsenate, pyroarsenate, antimonate, selenate and other such materials wherein the soluble form, upon reduction, produces either an insoluble solid, preferably complex, forming with iron hydroxides or oxides or a gas. Typically ferrous ion is generated at the anode, and hydrogen gas at the cathode with the hydrogen gas being vented to the ambient atmosphere.

In the use of cold and hot rolled steel anodes a problem was encountered in commercial scale systems in the formation of adherent hydrous oxide gelatinous precipitants which can lead to blocking of flow channels in the cell, especially the passage between closely spaced stacked electrode plates. Another problem encountered was the formation of an insoluble insulating iron oxide layer on the electrode surface, often underneath the gelatinous precipitants which can give rise to high over voltages and generation of oxygen at the anode. In U.S. Patent No. 4,123,339 this problem is solved by a periodic wash with a dilute inorganic acid and it is intended that continuous operation of the process of this invention would also include the periodic acid wash of the electrode plates described therein.

In addition, in the use of closely generally parallel plate electrodes including end electrodes to which the electrical potential is applied an electrode near at least one end electrode is positioned to protect the end electrode from flux field effects which would cause a more rapid consumption of the electrode. This feature is also described in U.S. Patent No. 4,036,726 and that feature is preferred in the cell of this invention.

The following examples are intended to be illustrative of the process of this invention and not limitative. In each example, a test solution of known concentration was prepared with a pH adjusted between 7 and 9. The solution was then passed through an ANDCO M cell described in the above referenced patents at a controlled flow rate with a known current passing through the cell. As equilibrium was reached samples were removed, the pH was adjusted to about 8, if necessary, and one to three drops of a 0.2% anionic polymer to aid in flocculation was added per 100 milliliters of sample. The mixture was then filtered. Dwell time in the cell was the same as that for heavy metal removal, generally about one minute.

EXAMPLE I

ATLANTIC PAPER RED P LIQUID

This dye was obtained from Atlantic Chemical Corp., Nutley, New Jersey. The concentration of dye was found to be 9.1 ppm and the initial pH was 7.4. The pH was adjusted to 8.48 for treatment. Table I below describes the results at different flow rates and different direct current potential applied across the cell.

TABLE I

| FLOW in ℓ/min (gpm) | A/V | pH OUT | RESULTS |
|---|---|---|---|
| 0,9 (0.2) | 10/16 | 9.22 | Colorless (not equilibrated) |
| 4,5 (1.0) | 7.5/16 | 9.60 | Pink |
| 2,3 (0.5) | 10/14.5 | | Pink |
| 0,9 (0.2) | 12.5/17 | 9.30 | Pink |
| 1,4 (0.3) | 12.5/16 | | Colorless |

It should be noted that the successful removal at 0.3 gpm and 12.5 volts was the result of a recycled solution. In order to remove all of the red dye it was necessary to recycle the solution through the cell several times.

EXAMPLE II

INDIGO DYE

In this Example a 500 ppm concentration of Indigo dye in water was evaluated. This dye is a water insoluble dye existing as a very fine suspension. Table II below demonstrates the results of this test.

3

TABLE II

| FLOW in ℓ/min (gpm) | A | pH OUT | RESULTS |
|---|---|---|---|
| 1,8 (0.4) | 5 | - | Clear colorless solution |
| 1,8 (0.4) | 8 | - | Clear colorless solution |
| 1,8 (0.4) | 9(18V) | - | Clear colorless solution |
| 0,9 (0.2) | 9.3 | 9.40 | Clear colorless solution |
| 5,4 (1.0) | 9 | 8.40 | Clear colorless solution |
| 8,2 (1.8) | 9 | 8.5 | Clear colorless solution |
| 10,8 (2.0) | 4 | 8.05 | Clear colorless solution |

As can be seen above, the process of this invention removed the dye from solution in each test. The pH of the solution prior to treatment was 8.38. It was also calculated that a concentration of 23 ppm ferrous ion was necessary to remove the 500 ppm of Indigo and therefore 0.046 ppm of ferrous ion was required per ppm of Indigo dye. Typically in the removal of heavy metals, 3 to 4 ppm ferrous ion will be required per ppm of heavy metal ion to be removed from solution.

EXAMPLE III

VAT BRILLIANT GREEN DYE

In this Example the concentration of Vat Brilliant Green dye was 264 ppm in the wastewater. The pH was initially 7.53 and then adjusted to 8.88 as shown below in Table III.

TABLE III

| FLOW [in ℓ/min] (gpm) | AMPS | pH OUT | RESULTS |
|---|---|---|---|
| 2,7 (0.6) | 3 | 7.78 | Colored supernat |
| 2,7 (0.6) | 10 | 8.53 | Colored supernat |
| (pH adjust 8.88 using NaOH) | | - | - |
| 0,9 (0.2) | 3 | 8.18 | Colored supernat |
| 0,9 (0.2) | 10 | 9.91 | Colorless/good flow |
| 2,7 (0.6) | 10 | - | Colored supernat |
| 5,4 (1.0) | 12 | - | Colored supernat |
| 1,4 (0.3) | 12(15V) | - | Colorless/good flow |

This dye appears to be partially soluble, and insoluble microparticles are present. The dye solution was initially filtered with No. 4 whatman filter paper and no insoluble was collected. It was calculated that 0.7 ppm ferrous ion was required to remove 1 ppm Vat Brilliant Green dye.

EXAMPLE IV

MIXED VAT DYES

A mixture was prepared of the following: Vat Olive, 213 milligrams; Vat Blue, 184 milligrams; Vat Brown 194 milligrams, and Vat Yellow, 183 milligrams in two gallons of water. The mixture was a muddy brown/green solution or very fine suspension and passed through No. 4 Whatman filter paper without leaving any insoluble residue. The pH was initially 7.95 and was adjusted for treatment to 7.56. Table IV below illustrates the results.

4

TABLE IV

| SAMPLE | TIME | FLOW in $\ell$/min (gpm) | A | pH OUT | RESULTS |
|---|---|---|---|---|---|
| - | $T_o$ = 2 h 15 min | | | | Colorless |
| 1 | 2 h 18 min | 5,4 (1) | 10(6.5V) | 7.62 | Filters fast clear |
| 2 | 2 h 22 min | 5,4 (1) | 10(10V) | 7.91 | Filters fast clear |

In this Example, it was calculated that 0.68 ppm ferrous ion was required per ppm of dye mixture.

Many other dyes including Diazo Black, Sodyeko Black, Toron Black Sk, and Vitrolan Blue 26 were also successfully tested according to the process of this invention.

In summary, it has been discovered that organic dye stuffs and other color impurities as well as heavy metals and other contaminants can be removed from wastewater solutions by electrolytically generating ferrous ion in a cell having an anode of iron, iron alloy, or iron isoluble compound. Passing the wastewater solution through the cell while an electrical potential is applied across the anode and cathode, will, on continuous operation result in consumption of the iron anode and coprecipitation of the dye either with or on the surface of ferrous hydroxide as it precipitates to form a sludge. It is not known for certain that there is not also a chemical reaction involving the ferrous ion. The color impurities however are quickly and efficiently removed as precipitates so that the wastewater solution can be disposed of safely.

## Claims

1. A method for electrochemically and simultaneously removing from an ionizing medium organic dye stuffs and heavy metals which are capable of forming an insoluble iron compound or complex which comprises passing an electric current through the ionizing medium containing the ions to be removed between an anode which has a surface or a portion of a surface thereof of iron, iron alloy or insoluble iron compound, and a cathode so as to produce anodically an insoluble iron compound, species or complex in said ionizing medium while cathodically reacting said contaminant ion with the ionizing medium to generate an insoluble hydroxide thereof and whereby an insoluble iron compound or complex with the contaminant ion is produced, and removing said insoluble iron compound or complex with the contaminant ions from the ionizing medium.

2. The method of claim 1 wherein the pH of the medium is 7 to 9.

3. The method of claim 1 wherein said ionizing medium is water and the reaction process includes an insoluble iron oxide, or hydroxide and hydrogen.

4. The method of claim 1 further comprising periodically treating the electrodes with a dilute inorganic acid solution by flowing said acid solution along and between the surfaces of said electrodes at a flow rate sufficient to providing mechanical washing action to remove any electrochemically formed substances on or lodged between the surfaces of said electrodes.

5. The method of claim 1 wherein the electrochemical cell comprises a pair of outer electrode elements positioned in a spaced apart relationship with additional electrode elements between said outer electrode elements in closely spaced relationship said process further comprising providing one of said additional electrode elements in neighboring relation to a corresponding one of said outer electrode elements being of sufficient size so as to extend beyond said outer eletrode elements so as to shield said outer electrode element from flux field effects causing excessive current density.

6. The method of claim 1 wherein said anode and cathode are rolled steel.

## Revendications

1. Un procédé pour éliminer électrochimiquement et simultanément d'un milieu ionisant des matières colorantes organiques et des métaux lourds qui sont capables de former un composé ou complexe de fer insoluble, qui consiste à faire passer un courant électrique à travers le milieu ionisant contenant les ions à éliminer, entre une anode dont une surface ou une partie de surface est en fer, en alliage de fer ou en un composé de fer insoluble, et une cathode de manière à produire anodiquement un composé,

EP 0 295 696 B1

espèce ou complexe de fer insoluble dans ledit milieu ionisant tout en faisant réagir cathodiquement ledit ion contaminant avec le milieu ionisant pour engendrer un hydroxyde insoluble de celui-ci et pour qu'un composé ou complexe de fer insoluble avec le contaminant soit produit, et à éliminer du milieu ionisant ledit composé ou complexe de fer insoluble avec les ions contaminants.

2. Le procédé de la revendication 1, dans lequel le pH du milieu est de 7 à 9.

3. Le procédé de la revendication 1, dans lequel ledit milieu ionisant est de l'eau et le processus de réaction comporte un oxyde de fer insoluble, ou un hydroxyde et de l'hydrogène.

4. Le procédé de la revendication 1, comportant en outre le traitement périodique des électrodes à l'aide d'une solution acide inorganique diluée en faisant circuler ladite solution acide le long de et entre les surfaces desdites électrodes suivant un débit suffisant pour produire une action de lavage mécanique de manière à éliminer toutes substances électrochimiquement formées sur ou déposées entre les surfaces desdites électrodes.

5. Le procédé de la revendication 1, dans lequel la cellule électrochimique comporte une paire d'éléments électrodes extérieurs disposés de manière espacée, avec des éléments d'électrodes additionnels entre lesdits éléments d'électrodes extérieurs en relation étroite d'espacement, ledit procédé comportant au surplus la phase consistant à prévoir l'un desdits éléments d'électrodes additionnels en relation de voisinage avec l'un correspondant desdits éléments d'électrodes extérieurs d'une taille suffisante pour qu'il s'étende au-delà desdits éléments d'électrodes extérieurs pour protéger ledit élément d'électrode extérieur contre les effets de champ de flux provoquant une densité de courant excessive.

6. Le procédé de la revendication 1, dans lequel lesdites anode et cathode sont en acier laminé.

**Patentansprüche**

1. Verfahren zur elektrochemischen und gleichzeitigen Entfernung von organischen Farbstoffen und Schwermetallen, die zur Bildung einer unlöslichen Eisenverbindung oder eines Eisenkomplexes fähig sind, aus einem ionisierenden Medium durch Hindurchleiten von elektrischem Strom durch das die zu entfernenden Ionen enthaltende ionisierende Medium zwischen einer Anode mit einer Oberfläche oder einem Teil ihrer Oberfläche aus Eisen, einer Eisenlegierung oder einer unlöslichen Eisenverbindung und einer Kathode zur anodischen Bildung einer unlöslichen Eisenverbindung oder -spezies oder eines Eisenkomplexes in dem ionisierenden Medium unter kathodischer Reaktion des verunreinigenden Ions mit dem ionisierenden Medium unter Bildung eines unlöslichen Hydroxids desselben und Ausbildung einer unlöslichen Eisenverbindung oder eines Eisenkomplexes mit dem verunreinigenden Ion und Entfernen der unlöslichen Eisenverbindung oder des Komplexes mit den verunreinigenden Ionen aus dem ionisierenden Medium.

2. Verfahren nach Anspruch 1, dadurch gekennzeichnet, daß der pH-Wert des Mediums 7 - 9 beträgt.

3. Verfahren nach Anspruch 1, dadurch gekennzeichnet, daß das ionisierende Medium aus Wasser besteht und das Reaktionsverfahren ein unlösliches Eisenoxid oder -hydroxid und Wasserstoff umfaßt.

4. Verfahren nach Anspruch 1, dadurch gekennzeichnet, daß zusätzlich periodisch die Elektroden mit einer verdünnten anorganischen Säurelösung behandelt werden, indem die Säurelösung längs und zwischen den Oberflächen der Elektroden strömen gelassen wird, wobei die Strömungsgeschwindigkeit ausreicht, um zur Entfernung etwaiger elektrochemisch gebildeter Substanzen auf oder zwischen den Oberflächen der Elektroden eine mechanische Waschwirkung zu entfalten.

5. Verfahren nach Anspruch 1, wobei die elektrochemische Zelle zwei voneinander beabstandete äußere Elektrodenelemente aufweist, zwischen denen weitere Elektrodenelemente mit engem gegenseitigen Abstand angeordnet sind, dadurch gekennzeichnet, daß eines der weiteren Elektrodenelemente, das zu einem betreffenden der äußeren Elektrodenelemente benachbart angeordnet ist, so groß gewählt wird, daß es sich über die äußeren Elektrodenelemente hinaus erstreckt und damit das äußere Elektrodenelement vor Kraftlinienflußfeldeffekten, die eine übermäßige Stromdichte herbeiführen, abschirmt.

6

**6.** Verfahren nach Anspruch 1, dadurch gekennzeichnet, daß die Anode und die Kathode aus Walzstahl bestehen.